(19) Europäisches Patentamt
European Patent Office
Office européen des brevets

(11) **EP 4 158 292 B1**

(12) **EUROPÄISCHE PATENTSCHRIFT**

(45) Veröffentlichungstag und Bekanntmachung des Hinweises auf die Patenterteilung:
**26.11.2025  Patentblatt 2025/48**

(21) Anmeldenummer: **21726323.5**

(22) Anmeldetag: **08.04.2021**

(51) Internationale Patentklassifikation (IPC):
*G01M 7/00* (2006.01)     *G01H 3/06* (2006.01)
*G01H 1/00* (2006.01)     *G01H 11/06* (2006.01)
*H02K 7/14* (2006.01)     *H02K 11/20* (2016.01)
*H02P 1/00* (2006.01)     *H02P 21/05* (2006.01)

(52) Gemeinsame Patentklassifikation (CPC):
**G01M 7/00; G01H 1/003; G01H 3/06; G01H 11/06; H02K 11/20; H02P 1/00; H02P 21/05;** H02K 7/14

(86) Internationale Anmeldenummer:
**PCT/DE2021/200043**

(87) Internationale Veröffentlichungsnummer:
**WO 2021/239192 (02.12.2021 Gazette 2021/48)**

(54) **VERFAHREN ZUM BESTIMMEN EINES SCHWINGUNGSVERHALTENS EINES ELEKTROMOTORS**

METHOD FOR DETERMINING THE VIBRATION BEHAVIOR OF AN ELECTRIC MOTOR

PROCÉDÉ DE DÉTERMINATION DU COMPORTEMENT VIBRATOIRE D'UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2020  DE 102020206626**

(43) Veröffentlichungstag der Anmeldung:
**05.04.2023  Patentblatt 2023/14**

(73) Patentinhaber: **ZIEHL-ABEGG SE**
**74653 Künzelsau (DE)**

(72) Erfinder: **OBST, Raphael Simon**
**74613 Öhringen (DE)**

(74) Vertreter: **Ullrich & Naumann PartG mbB**
**Schneidmühlstrasse 21**
**69115 Heidelberg (DE)**

(56) Entgegenhaltungen:
**DE-U1- 202019 101 262**

**Beschreibung**

Die Erfindung betrifft ein Verfahren zum Bestimmen eines Schwingungsverhaltens eines Elektromotors, insbesondere eines Elektromotors eines Ventilators. Die Erfindung betrifft ferner einen entsprechenden Elektromotor sowie einen Ventilator.

Beim Betrieb eines Elektromotors entstehen durch inhomogene Verteilung einer rotierenden Masse radial umlaufende Beschleunigungskräfte. Die rotierende Masse ist dabei im Wesentlichen durch den Rotor gebildet. Zusätzlich kann die rotierende Masse die Teile umfassen, die durch den Elektromotor direkt angetrieben werden. Wenn der Elektromotor beispielsweise Teil eines Ventilators ist, kommt die Masse eines Laufrads zu der rotierenden Masse hinzu.

Radial umlaufende Beschleunigungskräfte regen Schwingungen an. Diese Schwingungen können sowohl mechanischer als auch akustischer Natur sein. Das Schwingverhalten ist drehzahlabhängig, wobei bei bestimmten Drehzahlen Schwingungsüberhöhungen (also Resonanzen) entstehen. Da sich Resonanzen negativ auf den Betrieb des Elektromotors auswirken, beispielsweise durch erhöhte Geräuschentwicklung oder durch Beeinträchtigung der Lebensdauer des Elektromotors, wird versucht, den Betrieb des Elektromotors bei Drehzahlen, die Resonanzen respektive Schwingüberhöhungen hervorrufen, möglichst zu vermeiden. Dies kann durch schnelles Überfahren dieser Drehzahlen oder durch Nichtzulassen des Betriebs bei diesen Drehzahlen erfolgen. Insbesondere bei einem Ventilator ist diese Herangehensweise meist problemlos möglich.

Wenn der Betrieb bei einer Resonanzstelle vermieden werden soll, müssen die Drehzahlen, an denen Resonanz entsteht, bekannt sein. Da diese Drehzahlen verschiedene Einflussfaktoren haben und meist von dem jeweiligen Aufstellungsort des Elektromotors abhängig sind, ist ein Bestimmen von Resonanzstellen in einem Prüfstand vor Auslieferung des Elektromotors häufig nicht ausreichend. Daher sind Elektromotoren bekannt, in die Sensorik zur Schwingungserfassung eingebaut sind.

Ein derartiger Elektromotor ist beispielsweise in der DE 10 2018 211 838 A1 beschrieben.

Viele Elektromotoren besitzen eine integrierte Elektronik. Bei EC (Electronically Commuted)-Motoren ist diese Elektronik für das Ansteuern der Statorwicklungen zum Erzeugen eines Drehfelds in dem Stator verantwortlich und basiert meist auf einem Mikroprozessor, beispielsweise einem Mikrocontroller. Die Aufgaben des Mikroprozessors können neben der korrekten Speisung der Motorströme unter anderem Kommunikationsaufgaben, Statistikdatenerfassung und/oder Sensordatenverwertung umfassen.

Die Erfassung von Beschleunigungen erfolgt regelmäßig über Schwingungssensoren, häufig auch als Beschleunigungssensoren bezeichnet. In vorteilhafter Weise sind die Beschleunigungssensoren als MEMS (Mikro-Elektro-Mechanisches System) ausgeführt. Durch die besonders kompakte Bauweise von MEMS-Sensoren sind diese ideal geeignet, direkt auf der Elektronik eines EC-Motors platziert zu werden. MEMS zeichnen sich häufig dadurch aus, dass sie Komponenten zur Signalerfassung, wie einen A/D-Wandler, integriert haben. Dadurch muss ein Beschleunigungssignal nicht durch zusätzliche Beschaltung von einem analogen in ein digitales Signal überführt werden. Vielmehr kann der digitale Messwert direkt von dem Sensor zu dem Mikroprozessor übertragen werden, wo eine Verarbeitung der Daten / Visualisierung der Daten erfolgen kann.

Zur Übertragung von Messdaten zwischen einem MEMS-Sensor und dem Mikrocontroller eignet sich eine Übertragung über einen Datenbus, beispielsweise $I^2C$ (Inter-Integrated Circuit) oder SPI (Serial Peripheral Interface). Auch ein Datenbus ist jedoch technischen und physikalischen Gegebenheiten unterworfen, wodurch eine Übertragung von Daten eine bestimmte Übertragungsdauer in Anspruch nimmt und den Bus für diese Übertragungsdauer belegt. Auch mit anderen Hardwarekomponenten, wie beispielsweise Speicher (z. B. ein EEPROM (Electronically Erasable Programmable Read-Only Memory)), kann über den Datenbus kommuniziert werden. In der Natur der Sache liegt, dass ein Mikrocontroller zu einem Zeitpunkt lediglich mit einer Komponente kommunizieren kann.

Auch weitere Sensortypen, wie beispielsweise ein Halleffekt-/Magnetsensor, können über den Datenbus angesteuert und ausgelesen werden. Ein bzw. mehrere Halleffekt-/Magnetsensoren werden regelmäßig dazu verwendet, um die korrekte Speisung der Motorströme zu berechnen. Alternative Verfahren zur Berechnung der korrekten Speiseströme, um den Motor zum Drehen zu bringen, kommen zwar ohne Halleffekt-/Magnetsensoren aus, erfordern jedoch erhöhte Berechnungsaufwände auf dem Mikroprozessor.

Das Erkennen von Resonanzstellen erfordert die Abtastung von Schwingungen des Elektromotors über zumindest Teile der möglichen Betriebsdrehzahlen des Elektromotors. Insbesondere bei Ventilatoren erfolgt diese Abtastung üblicherweise während eines Hochlaufs oder eines Herunterlaufs. Bei einem Hochlauf wird der Ventilator von einer Mindestdrehzahl (meist einem Stillstand des Ventilators) auf eine Maximaldrehzahl beschleunigt. Bei einem Herunterlauf wird die Drehzahl von einer Startdrehzahl ungleich null (meist Maximaldrehzahl) zu einer Mindestdrehzahl (meist einem Stillstand des Ventilators) reduziert. In beiden Fällen werden die Schwingungen des Elektromotors in Abhängigkeit der Drehzahl erfasst und ausgewertet. Zu einer derartigen Erfassung eines Schwingungsverhaltens sei beispielhaft auf die DE 20 2019 101 262 U1 verwiesen.

Derartige Verfahren weisen den entscheidenden Nachteil auf, dass die Hardwarekomponenten des Elektromotors häufig bereits in erheblichem Maße durch Basisfunktionalitäten des Elektromotors, insbesondere das Bewegen des Rotors, belastet sind. Nicht selten beanspruchen diese Vitalfunktionalitäten weit über 50 % der Rechenleistung des Mikroprozessors, sodass für zusätzliche Funktionalitäten lediglich eine beschränkte Rechenleistung zur Verfügung steht. Auch ein Datenbus kann bereits erheblich durch Basisfunktionalitäten beansprucht sein, sodass insgesamt für eine Bestimmung des Schwingungsverhaltens nur noch wenige Ressourcen zur Verfügung stehen. In der Praxis wird diesem Problem dadurch begegnet, dass der Hochlauf bzw. der Herunterlauf derart in die Länge gezogen wird, dass zwischen den einzelnen Messungen ausreichend Zeit für eine Analyse erfasster Schwingungswerte besteht. Allerdings summiert sich dadurch die Gesamtmessdauer der Messung rasch auf mehrere Minuten. Für Schnellprüfungen, beispielsweise in der Endprüfung einer Produktion, ist eine solche Herangehensweise daher ungeeignet. Ferner ist die Qualität des Bestimmens des Schwingungsverhaltens meist beschränkt, da zum Einsparen von Ressourcen auf eine ausreichend hohe Auflösung verzichtet werden muss. Selbst wenn für das Bestimmen des Schwingungsverhaltens ausreichend Zeit zur Verfügung steht, ist die Qualität der Ergebnisse oft unbefriedigend. Eine Erhöhung der zur Verfügung stehenden Ressourcen, beispielsweise durch Erhöhen der Rechenleistung oder durch Hinzufügen eines weiteren Datenbusses, scheidet vielfach aus, insbesondere aus Kostengründen.

Der vorliegenden Erfindung liegt die Aufgabe zugrunde, ein Verfahren, einen Elektromotor und einen Ventilator der eingangs genannten Art derart auszugestalten und weiterzubilden, dass eine präzise Bestimmung eines Schwingungsverhaltens des Elektromotors auch bei beschränkten Ressourcen ermöglicht wird.

Erfindungsgemäß wird die voranstehende Aufgabe durch die Merkmale des Anspruches 1 gelöst. Danach wird das in Rede stehende Verfahren im Zusammenhang mit einem Elektromotor eingesetzt, der bei Deaktivieren einer antreibenden Beaufschlagung während eines Auslaufs über eine Auslaufdauer hinweg von einer Anfangsdrehzahl zu einer Enddrehzahl ausläuft, und die Schritte umfasst:

Bringen des Elektromotors auf die Anfangsdrehzahl,
Auslösen des Auslaufs durch Deaktivieren einer den Elektromotor antreibenden Beaufschlagung,
wiederholtes Erzeugen eines erfassten Schwingungswerts während des Auslaufs durch Erfassen von Schwingungen zumindest eines Teils des Elektromotors mittels mindestens eines Schwingungssensors,
wiederholtes Erzeugen eines Ist-Drehzahlwerts des Elektromotors während des Auslaufs und
Bestimmen eines Schwingungsverhaltens des Elektromotors durch Auswerten erfasster Schwingungswerte unter Berücksichtigung Ist-Drehzahlwerte. Hinsichtlich eines Elektromotors ist die voranstehende Aufgabe durch die Merkmale des nebengeordneten Anspruchs 12, hinsichtlich eines Ventilators durch die Merkmale des weiter nebengeordneten Anspruchs 15 gelöst.

In erfindungsgemäßer Weise ist zunächst erkannt worden, dass auch ohne Ergänzung zusätzlicher Rechenkapazität und ohne Bereitstellung eines zusätzlichen Datenbusses oder sonstiger Zusatzressourcen eine zuverlässige und präzise Bestimmung eines Schwingungsverhaltens eines Elektromotors ermöglicht werden kann. Hierzu wird erfindungsgemäß eine Betriebsphase des Elektromotors genutzt, in der die Anforderungen an das Bereitstellen von Basisfunktionalitäten minimal sind. Eine derartige Betriebsphase ist der Auslauf des Elektromotors. Der Auslauf eines Elektromotors ist die Betriebsphase, in der keine antreibende Beaufschlagung des Elektromotors erfolgt und der Rotor des Elektromotors lediglich durch die Trägheit der rotierenden Masse in Bewegung bleibt. Die rotierende Masse ist üblicherweise durch die Masse des Rotors und gegebenenfalls der Masse der durch den Elektromotor direkt angetriebenen Last, beispielsweise einem Laufrad eines Ventilators, gebildet. Reibung und sonstige bremsenden Momente führen dazu, dass die Drehzahl kontinuierlich von einer Anfangsdrehzahl zu einer Enddrehzahl, häufig der Stillstand des Elektromotors, ausläuft. Während des Auslaufs durchläuft der Elektromotor also - bei ausreichend hoher Anfangsdrehzahl - alle Drehzahlen, die für das Schwingungsverhalten des Elektromotors von Bedeutung sind. Da das Schwingungsverhalten meist maßgeblich von einer inhomogenen Verteilung der rotierenden Masse abhängt, lässt sich aus dem Verhalten des Elektromotors während des Auslaufs auf das Schwingungsverhalten in einem Normalbetrieb schließen.

Zwar ist bei einem Auslauf des Elektromotors - anders als bei dem Hochlauf oder dem Herunterlauf - die Drehzahl des Elektromotors nicht derart steuerbar, dass während der Abtastung einer Reihe von aufeinanderfolgenden Schwingungswerten eine weitgehend konstante Drehzahl des Elektromotors vorliegt. Vielmehr wird sich die Drehzahl fortwährend ändern, also auch während der Abtastung einer Reihe von aufeinanderfolgenden Schwingungswerten. Dies kann bei einer nachfolgenden Analyse erfasster Schwingungswerte zu Fehlern führen. Allerdings ist erfindungsgemäß erkannt worden, dass die Drehzahländerungen für eine Reihe aufeinanderfolgender Schwingungswerte bei den in der Praxis genutzten Abtastraten meist gering genug sind, um dennoch eine ausreichend präzise Bestimmung des Schwingungsverhaltens zu gewährleisten. Daher nutzt das erfindungsgemäße Verfahren den Auslauf des Elektromotors, um das Schwingungsverhalten des Elektromotors zu bestimmen.

Bei dem erfindungsgemäßen Verfahren wird der Elektromotor zunächst auf eine Anfangsdrehzahl gebracht. Diese Anfangsdrehzahl ist in einer Ausgestaltung eine Nenndrehzahl des Elektromotors, in einer anderen Ausgestaltung eine technisch maximal zulässige Drehzahl und in einer weiteren Ausgestaltung eine Drehzahl, bis zu der eine Beurteilung des Schwingungsverhaltens interessant ist. Prinzipiell kann die Anfangsdrehzahl auch eine sonstige potentiell relevante Drehzahl sein. Bei welchen Wert die Anfangsdrehzahl gewählt wird, wird üblicherweise von dem verwendeten Elektromotor, dessen Einbauumgebung, der angetriebenen Last, den im Normalbetrieb für den Elektromotor relevanten Drehzahlen und/oder weiteren Rahmenbedingungen abhängen. Auch von Bedeutung dürfte sein, ob der gesamte Drehzahlbereich oder lediglich ein Teilbereich, beispielsweise um eine zu erwartende oder bekannte Resonanzstelle herum, untersucht werden soll. In den meisten Fällen dürfte die Anfangsdrehzahl nicht zu gering gewählt werden, um einen ausreichend langen Auslauf bieten zu können. In einer Weiterbildung ist die Anfangsdrehzahl größer als 1.000 Umdrehungen pro Minute gewählt. Lediglich beispielhaft und nicht auf diese beschränkt, seien Anfangsdrehzahlen von 1.200 Umdrehungen pro Minute, 1.700 Umdrehungen pro Minute und 3.000 Umdrehungen pro Minute genannt.

Wenn der Elektromotor auf die Anfangsdrehzahl gebracht worden ist, wird in einem nächsten Schritt der Auslauf ausgelöst. Dies geschieht dadurch, dass die den Elektromotor antreibende Beaufschlagung deaktiviert wird. Was das "Deaktivieren einer antreibenden Beaufschlagung" konkret bedeutet, hängt von der Technologie des Elektromotors ab. Allgemein kann gesagt werden, dass eine Deaktivierung einer antreibenden Beaufschlagung ein Abschalten der Ströme bedeutet, die ein antreibendes Drehmoment in Richtung der Drehung des Rotors verursachen und damit eine Drehung des Rotors aufrechterhalten oder beschleunigen. Bei einem EC-Motor würde das Deaktivieren der antreibenden Beaufschlagung beispielsweise ein Abschalten der Ströme für die Statorwicklungen bedeuten. Durch das Deaktivieren der antreibenden Beaufschlagung wird der Elektromotor nicht länger aktiv angetrieben und wird durch Reibung und andere bremsende Momente kontinuierlich abgebremst. Dadurch reduziert sich kontinuierlich die Drehzahl des Elektromotors.

Der Auslauf endet bei Erreichen einer Enddrehzahl, wobei die Zeitspanne zwischen Auslösen des Auslaufs und Erreichen der Enddrehzahl hier als Auslaufdauer bezeichnet wird. In einer Ausgestaltung ist die Enddrehzahl eine Drehzahl gleich Null, was einen Stillstand des Elektromotors bedeutet. In einer anderen Ausgestaltung ist die Enddrehzahl von Null verschieden. Eine derartige Enddrehzahl kann dadurch definiert sein, dass das Schwingungsverhalten unterhalb der Enddrehzahl nicht mehr untersucht werden muss, da beispielsweise keine Resonanzeffekte mehr zu erwarten sind oder entstehende Schwingungen unproblematische Amplituden aufweisen. Beispiele möglicher Enddrehzahlen ungleich Null, die nicht als beschränkend zu betrachten sind, sind 400 Umdrehungen pro Minute, 200 Umdrehungen pro Minute und 100 Umdrehungen pro Minute. Bei Erreichen der Enddrehzahl kann der Elektromotor aktiv bis zum Stillstand abgebremst werden. Alternativ kann der Elektromotor bis zum vollständigen Stillstand weiterdrehen, wobei die Schwingungen des Elektromotors nicht mehr weiter erfasst und ausgewertet werden.

Für das erfindungsgemäße Verfahren bietet es sich an, wenn die Auslaufdauer ausreichend lang ist, damit ausreichend Zeit für das Bestimmen des Schwingungsverhaltens bleibt. In einer Ausgestaltung ist die Auslaufdauer dabei größer als 5 Sekunden. In einer anderen Ausgestaltung ist die Auslaufdauer größer als 15 Sekunden. In einer weiteren Ausgestaltung ist die Auslaufdauer größer als 30 Sekunden.

Die Auslaufdauer sollte aber nicht zu lange sein. Eine Auslaufdauer von beispielsweise fünf Minuten ist in vielen Fällen nicht mehr wirtschaftlich nutzbar. Daher ist die Auslaufdauer in einer Ausgestaltung kleiner als 5 Minuten. In einer anderen Ausgestaltung ist die Auslaufdauer kleiner als 1 Minute. In einer weiteren Ausgestaltung ist die Auslaufdauer kleiner als 30 Sekunden.

Wenn die rotierende Masse und damit die Rotationsenergie derart groß sind, dass die Auslaufdauer zu lang ist, beispielsweise sehr viel größer als eine Minute, kann ein zusätzliches elektrisches Bremsen eingesetzt werden. Dadurch wird der Auslauf unterstützt und die Auslaufdauer verkürzt. Bei einem zusätzlichen elektrischen Bremsen wird in einer Weiterbildung eine möglichst gleichförmige Bremsung angestrebt. In einer anderen Weiterbildung wird ein nichtgleichförmiges Bremsen durchgeführt. Dies kann erwünscht sein, wenn beispielsweise aufgrund der aktuell erfassten Schwingungswerte offensichtlich ist, dass es sich um eine potentielle Resonanzstelle, zumindest aber um eine Stelle mit erhöhten Schwingwerten handelt. Dann kann die Bremsung reduziert oder ausgesetzt werden, um den kritischen Bereich noch genauer abzutasten. Unkritische Bereiche hingegen können stärkere Bremswirkungen zur Beschleunigung der Gesamtmessdauer genutzt werden. In dieser Weiterbildung würde das elektrische Bremsen also eine gewisse Steuerung des Auslaufs bieten.

Während des Auslauf wird wiederholt ein erfasster Schwingungswert erzeugt. Hierzu werden mittels mindestens eines Schwingungssensors Schwingungen des Elektromotors bzw. eines Teils des Elektromotors erfasst. Dabei sollte der mindestens eine Schwingungssensor derart mit dem Elektromotor gekoppelt sein, dass der mindestens eine Schwingungssensor für das Schwingungsverhalten des Elektromotors repräsentative Messsignale gewinnen kann. Für eine hohe zeitliche Auflösung sollten der Schritt des Erzeugens eines erfassten Schwingungswertes mit einer nicht zu geringen Rate wiederholt werden. In einer Weiterbildung wird eine Samplerate von mindestens 500 Hz, in einer anderen Weiterbildung eine Samplerate von mindestens 1 kHz genutzt.

Zusätzlich zu dem Erzeugen erfasster Schwingungswerte werden während des Auslaufs Ist-Drehzahlwerte erzeugt, die repräsentativ für eine aktuelle Drehzahl des Elektromotors sind. Hierzu kann ein Drehzahlsensor in dem Elektromotor angeordnet sein, wie sie in der Praxis hinlänglich bekannt sind. Ebenso denkbar ist, dass die Ist-Drehzahlwerte abhängig von der Anfangsdrehzahl und einem empirisch ermittelten Auslaufverhalten oder auf sonstige Weise abgeschätzt bzw. berechnet werden. Diese Herangehensweise bietet sich insbesondere dann an, wenn aus Kostengründen auf einen Drehzahlsensor verzichtet werden soll. Auf welche Weise die Ist-Drehzahlwerte ermittelt werden, ist für die vorliegende Erfindung nicht von Bedeutung. Wichtig ist, dass eine zeitliche Korrelation zwischen den erfassten Schwingungswerten und den erzeugten Ist-Drehzahlwerten herstellbar ist. Dies bedeutet, dass eine Information vorhanden ist, bei welchem erfassten Schwingungswert welche Drehzahl vorliegt. Ohne das Vorliegen einer derartigen Information oder einer Rekonstruierbarkeit einer derartigen Information, beispielsweise durch Interpolation, ließe sich ein drehzahlabhängiges Schwingungsverhalten des Elektromotors nur ungenau bestimmen. Die Ist-Drehzahlwerte können üblicherweise mit einer deutlich geringeren Rate erfasst werden als die erfassten Schwingungswerte, da sich die Drehzahl meist auf gut definierbare Weise ändern wird. Es kann ausreichend sein, wenn lediglich alle 10 Sekunden, 20 Sekunden oder noch seltener ein Drehzahlwert erfasst wird. In einer Weiterbildung wird mindestens einmal pro Sekunde ein Ist-Drehzahlwert erzeugt.

Durch Auswerten der erfassten Schwingungswerte und unter Berücksichtigung der Ist-Drehzahlwerte wird in einem weiteren Schritt des erfindungsgemäßen Verfahrens das Schwingungsverhalten des Elektromotors bestimmt. Dieses Auswerten kann auf verschiedene Weise erfolgen und hängt im Wesentlichen von dem zu erzielenden Ergebnis ab. Wenn beispielsweise die absoluten Amplituden der Schwingungen relevant sind, so kann das Auswerten ein Analysieren der Beträge der Schwingungswerte umfassen. Wenn Drehzahlen bestimmt werden sollen, die Resonanzen hervorrufen, können die Schwingungswerte mit entsprechenden Algorithmen zum Auffinden von Resonanzen ausgewertet werden.

In einer Weiterbildung des erfindungsgemäßen Verfahrens wird bei dem Bestimmen des Schwingungsverhaltens eine Frequenzanalyse von erfassten Schwingungswerten durchgeführt. Eine derartige Frequenzanalyse kann durch Filterung, beispielsweise mittels eines Tiefpassfilters, erfolgen. In einer Weiterbildung umfasst diese Frequenzanalyse ein Bestimmen von spektralen Anteilen in dem zeitlichen Verlauf der Schwingungswerte. Hierzu kann beispielsweise eine Fourier-Analyse, insbesondere eine FFT (Fast Fourier Transform), genutzt werden.

In einer Weiterbildung einer Frequenzanalyse wird der Görtzel-Algorithmus verwendet, der von Gerald Görtzel im Jahre 1958 veröffentlicht worden ist. Mit dem Görtzel-Algorithmus lassen sich einzelne spektrale Anteile eines Signals sehr effizient ermitteln. In einer Ausgestaltung werden dabei die Schwingungen erster Ordnung bestimmt, da die Amplituden erster Ordnung insbesondere für eine Beurteilung von relevanten Resonanzen besonders aussagekräftig sind. Es sind jedoch auch andere Ordnungen denkbar, da diese auch Resonanzen hervorrufen können.

In einer anderen Weiterbildung des erfindungsgemäßen Verfahrens wird bei dem Bestimmen des Schwingungsverhaltens mindestens ein Effektivwert von erfassten Schwingungswerten bestimmt. Dieser Effektivwert umfasst ein breiteres Frequenzspektrum, eventuell sogar das gesamte Frequenzspektrum. Wenn die Schwingungen maßgeblich durch die erste Ordnung bestimmt sind, ist die erste Ordnung meist so dominant, dass andere Frequenzanteile vernachlässigbar sind. Gleichzeitig können bei der Nutzung eines Effektivwerts aber auch Resonanzen höherer Ordnung berücksichtigt werden, beispielsweise eine Resonanz fünfter Ordnung.

In einer Weiterbildung wird bei dem Schritt des Bestimmens des Schwingungsverhaltens eine vordefinierte Anzahl von nacheinander erfassten Schwingungswerten als ein Satz von Schwingungswerten ausgewertet. Eine derartige Bildung von Sätzen von Schwingungswerten kann beispielsweise bei einer Frequenzanalyse erfasster Schwingungswerte eingesetzt werden. Aber auch bei anderen Arten der Auswertung erfasster Schwingungswerte kann das Bilden von Sätzen von Schwingungswerten hilfreich sein. Wie groß die vordefinierte Anzahl von nacheinander erfassten Schwingungswerten in einem Satz von Schwingungswerten ist, wird von der jeweiligen Art der Auswertung abhängen. In einer Ausgestaltung der vordefinierten Anzahl werden $2^k$ erfasste Schwingungswerte zu einem Satz von Schwingungswerten zusammengefasst, wobei k eine natürliche Zahl ist. Die Anzahl der vordefinierten Werte kann auch eine andere sein, als eine Potenz der Zahl 2. Ebenfalls kann die Anzahl der zu berücksichtigenden Werte variabel sein und beispielsweise von der Drehzahl abhängen. Auch müssen die Schwingungswerte nicht einem einzigen Satz von Schwingungswerten zugeordnet werden, sondern können Teil vieler Sätze von Schwingungswerten sein, sofern beispielsweise gleitende Sätze angenommen werden.

Da während des Auslaufs bei jedem Schwingungswert, der Bestandteil eines Satzes von Schwingungswerten ist, eine andere Drehzahl vorliegen wird, wird in einer Weiterbildung dem Satz von Schwingungswerten eine Drehzahl zugeordnet, die von zumindest einer Ist-Drehzahl für den Satz von Schwingungswerten abgeleitet ist. Diese zugeordnete Drehzahl kann in einer Ausgestaltung die Drehzahl für einen ersten Schwingungswert des Satzes von Schwingungswerten sein, in einer anderen Ausgestaltung die Drehzahl für einen letzten Schwingungswert des Satzes von Schwingungswerten, in einer weiteren Ausgestaltung die Drehzahl für einen Schwingungswert in der Mitte des Satzes von Schwingungswerten und in einer noch weiteren Ausgestaltung ein Mittelwert aller Drehzahlen für Schwingungswerte des Satzes von Schwingungswerten. Ein Ergebnis einer Analyse des Satzes von Schwingungswerten würde dann mit der zugeordneten Drehzahl verknüpft.

Prinzipiell kann das Ergebnis, das in dem Schritt des Bestimmens eines Schwingungsverhaltens gewonnen wird, auf verschiedene Weise repräsentiert werden. Wesentlich bei einer Repräsentation des Ergebnisses ist, dass daraus zumindest bis zu einem gewissen Grad ein Schwingungsverhalten des Elektromotors entnehmbar ist. Dieses Ziel lässt sich unterschiedlich realisieren. In einer Ausgestaltung wird das Schwingungsverhalten durch eine Vielzahl von Amplituden-Drehzahl-Paaren repräsentiert, die jeweils eine Amplitude einer Schwingung mit einer zugehörigen Drehzahl in Beziehung setzen. Die Amplitude einer Schwingung kann dabei unmittelbar durch den erzeugten Schwingungswert gebildet sein. Die Amplitude einer Schwingung kann jedoch auch durch eine Analyse von erzeugten Schwingungswerten gewonnen werden, beispielsweise mittels einer Frequenzanalyse und/oder dem Extrahieren von Schwingungen einer bestimmten Ordnung. Die Amplituden-Drehzahl-Paare lassen sich beispielsweise mittels eines Datenfeldes repräsentieren und als eine Look-up-Tabelle nutzen.

In einer anderen Ausgestaltung, die alternativ oder zusätzlich genutzt werden kann, kann das Ergebnis, das in dem Schritt des Bestimmens eines Schwingungsverhaltens gewonnen wird, durch Angabe einer oder mehrerer Resonanzstellen des Elektromotors repräsentiert werden. Eine Resonanzstelle kann durch die Drehzahl angegeben werden, bei der eine Resonanz auftritt. Zusätzlich kann ein Wert angegeben sein, der das Ausmaß der Schwingung repräsentiert. Dies kann durch Angabe einer Amplitude der Schwingung an oder bei der Resonanzstelle und/oder durch ein Bewertungsmaß erfolgen. Das Bewertungsmaß kann angeben, ob eine Resonanzstelle kritische Schwingungsamplituden umfasst und/oder wie kritisch/unkritisch diese Schwingungsamplituden sind.

Beim Bestimmen einer oder mehrerer Resonanzstellen wird in einer Weiterbildung eine verfeinerte Messung durchgeführt. Eine verfeinerte Messung kann nach Abschluss des Auslaufs gestartet werden. Alternativ kann ein Auslauf unterbrochen und die verfeinerte Messung eingeschoben werden. In beiden Fällen würde der Elektromotor auf eine neue Anfangsdrehzahl gebracht, die größer als eine Drehzahl der Resonanzstelle ist. Der Unterschied zwischen neuer Anfangsdrehzahl und Drehzahl der Resonanzstelle kann von dem Ausmaß der Resonanzstelle abhängig gemacht werden. Wenn an der Resonanzstelle hohe oder sehr hohe Schwingungswerte auftreten, kann eine detaillierte Untersuchung eines relativ breiten Bereichs um die Resonanzstelle von Interesse sein, um beispielsweise festzustellen, bei welchen Drehzahlen unkritische Schwingungswerte auftreten. In einer Ausgestaltung ist die neue Anfangsdrehzahl zwischen 10 und 300 Umdrehungen pro Minute größer als die Drehzahl der Resonanzstelle, in einer anderen Ausgestaltung zwischen 50 und 200 Umdrehungen pro Minute, in einer weiteren Ausgestaltung um 100 Umdrehungen pro Minute größer als die Drehzahl der Resonanzstelle. Nachdem der Elektromotor auf die neue Anfangsdrehzahl gebracht worden ist, wird ein weiterer Auslauf ausgelöst und es werden Schwingungswerte erfasst und ausgewertet. Dabei kann es sich anbieten, wenn die Schwingungswerte mit einer höheren Abtastrate erfasst werden als bei einem vorherigen Durchlauf.

Ein Bringen auf eine Anfangsdrehzahl - ob bei der "eigentlichen" Messung oder einer verfeinerten Messung - kann durch Beschleunigen und/oder Abbremsen des Elektromotors erfolgen. Dabei kann der Elektromotor durch eine Regelung auf die Anfangsdrehzahl gebracht werden, wobei eine möglichst geringe Regeldifferenz zwischen Istdrehzahl und Anfangsdrehzahl eingeregelt werden kann. Diese Regelung kann ein Ausregeln eines eventuellen Überschwingens der Drehzahl umfassen. Ein möglichst präzises Regeln auf die Anfangsdrehzahl kann sich dann anbieten, wenn die Drehzahlmessung beim Auslauf lediglich mit geringer Auflösung oder geringer Abtastrate möglich ist und definierte Anfangsbedingungen geschaffen werden sollten. Allerdings ist es auch denkbar, dass der Elektromotor lediglich auf eine Drehzahl "in der Nähe" der Anfangsdrehzahl gebracht wird. In einer Ausgestaltung bedeutet "in der Nähe", dass sich die Drehzahl im Bereich zwischen 0,9- und 1,1-mal der Anfangsdrehzahl befindet. In einer anderen Ausgestaltung kann "in der Nähe" einen Bereich zwischen 0,95- und 1,05-mal der Anfangsdrehzahl sein. Diese Herangehensweise ist dann ausreichend, wenn die Drehzahl während des Auslaufs mit ausreichender Auflösung und/oder ausreichender Abtastrate erfasst werden kann.

Prinzipiell kann der Schwingungswert auf verschiedene Weise repräsentiert sein. Die Repräsentation dürfte davon abhängen, wie der Schwingungswert erfasst worden ist und wie präzise eine Auswertung stattfinden soll. Der Schwingungswert wird mit einem Schwingungssensor aufgenommen, der als 1-Achsen-Schwingungssensor, 2-Achsen-Schwingungssensor oder 3-Achsen-Schwingungssensor ausgebildet sein kann. Es können auch mehrere 1-Achsen-Schwingungssensoren mit unterschiedlichen Messachsen genutzt werden. Je nach Ausgestaltung des Schwingungssensors werden also Schwingungen in einer oder mehreren Raumrichtungen aufgenommen. Diese Schwingungen können in dem Schwingungswert wiedergegeben sein. In einer Weiterbildung gibt der erfasste Schwingungswert daher Schwingungen in einer, zwei oder drei Raumrichtungen an. Dabei bietet es sich an, wenn bei zwei Raumrichtungen diese senkrecht zueinander und bei drei Raumrichtungen diese paarweise senkrecht zueinander sind. Der Schwingungswert kann dann als ein-, zwei- oder dreidimensionale Größe repräsentiert sein. Der Schwingungswert kann auch von den eigentlichen Messwerten abgeleitet sein. Beispielsweise kann der Schwingungswert eine Schwingungskomponente in einer für die Belastung des Elektromotors besonders kritischen Richtung sein.

Prinzipiell kann das Ausführen des erfindungsgemäßen Verfahrens durch verschiedene Situationen ausgelöst werden. Es ist denkbar, dass das Verfahren in einer Endprüfung des Elektromotors und/oder bei einer Erstinbetriebnahme des Elektromotors in der Einbauumgebung ausgelöst wird. Das erfindungsgemäße Verfahren kann aber auch bei jedem Auslauf ausgelöst werden, um beispielweise aufkommenden Verschleiß oder - beispielsweise im Falle eines Ventilators - zunehmende Anhaftungen an dem Laufrad zu erkennen. Denkbar ist auch, dass das erfindungsgemäße Verfahren bei einem Auslauf nach Ablauf einer vorgegebenen Anzahl von Betriebsstunden ausgelöst wird.

Mit jedem Bestimmen des Schwingungsverhaltens können Ergebnisse der Analyse, beispielsweise eine Vielzahl von Amplituden-Drehzahl-Paare oder Informationen über eine oder mehrere Resonanzstellen, abgespeichert werden. Abgespeicherte Ergebnisse können bei einer erneuten Durchführung des Verfahrens genutzt werden, um Veränderungen des Schwingungsverhaltens festzustellen. Wenn sich das Schwingungsverhalten des Elektromotors zunehmend verschlechtert und/oder das Schwingungsverhalten einen vorgegebenen Grenzwert nicht mehr einhalten kann, kann eine Warnmeldung ausgelöst werden.

Das erfindungsgemäße Verfahren wird vorzugsweise auf einem erfindungsgemäßen Elektromotor durchgeführt, der zum Ausführen des Verfahrens ausgestaltet ist. Da sich das erfindungsgemäße Verfahren besonders günstig durch eine Kombination aus Software und Hardware implementieren lässt, umfasst der erfindungsgemäße Elektromotor entsprechend geeignete Hardware sowie Software, die auf der Hardware läuft und das erfindungsgemäße Verfahren ausführt. In einer Ausgestaltung umfasst der Elektromotor einen Mikroprozessor, beispielsweise einen Mikrocontroller, sowie mindestens einen Speicher. In dem Speicher ist Software abgelegt, die in den Mikroprozessor geladen und dort ausgeführt wird und den Mikroprozessor zum Ausführen des Verfahrens steuert.

In einer Ausgestaltung ist die Software und Hardware zur Durchführung des erfindungsgemäßen Verfahrens in einer Motorelektronik implementiert, die den Elektromotor in einem Normalbetrieb steuert, insbesondere die antreibende Beaufschlagung des Elektromotors vornimmt und Wicklungen des Elektromotors bestromt. Dabei kann die Motorelektronik ein ermitteltes Schwingungsverhalten zum Ansteuern des Elektromotors nutzen und vorzugsweise Drehzahlen des Elektromotors mit ungünstigem Schwingungsverhalten vermeiden.

In einer Weiterbildung umfasst der Elektromotor mindestens einen Schwingungssensor, der Schwingungen des Elektromotors oder Teile des Elektromotors erfassen kann. Dabei kann der mindestens eine Schwingungssensor in einer Elektronik des Elektromotors integriert sein, beispielsweise einer Motorelektronik zum Ansteuern der Wicklungen des Elektromotors. Denkbar ist beispielsweise eine Integration des mindestens einen Schwingungssensors auf einer Platine der Motorelektronik, wie sie in der DE 10 2018 211 838 A1 beschrieben ist.

Wenn mehrere Schwingungssensoren vorgesehen sind, können die mehreren Schwingungssensoren Schwingungen an unterschiedlichen Stellen des Elektromotors und/oder Schwingungen in unterschiedliche Richtungen erfassen. Der mindestens eine Schwingungssensor kann auf verschiedenste Arten gebildet sein, solange der mindestens eine Schwingungssensor Schwingungswerte liefern kann, die für das Schwingungsverhalten des Elektromotors repräsentativ sind. Der Schwingungssensor kann durch ein MEMS (Micro Electro-Mechanical System)-Beschleunigungssensor, ein piezoelektrischer Beschleunigungssensor, ein Mikrofon (beispielsweise ein MEMS-Mikrofon) oder Dehnungsmessstreifen gebildet sein. Entsprechend geeignete Sensoren sind aus der Praxis hinlänglich bekannt.

Prinzipiell kann der Elektromotor verschiedentlich ausgebildet sein. In einer bevorzugten Ausgestaltung ist der Elektromotor durch einen EC-Motor (Electronically Commutated Motor) gebildet, bei dem eine Motorelektronik ein System von Speisesignalen erzeugt, wobei das System von Speisesignalen ein Drehfeld in dem Elektromotor erzeugen kann, das eine Drehbewegung des Rotors hervorruft. Dabei kann der EC-Motor in Innenläuferbauweise oder in Außenläuferbauweise aufgebaut sein.

Der erfindungsgemäße Elektromotor kann Teil eines erfindungsgemäßen Ventilators sein, wobei der Rotor des Elektromotors mit einem Laufrad des Ventilators gekoppelt ist und dieses antreibt.

Es gibt nun verschiedene Möglichkeiten, die Lehre der vorliegenden Erfindung in vorteilhafter Weise auszugestalten und weiterzubilden. Dazu ist einerseits auf die den nebengeordneten Ansprüchen nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1    ein Diagramm mit einem beispielhaften Verlauf der Drehzahl eines Elektromotors bei einer Durchführung eines erfindungsgemäßen Verfahrens,

Fig. 2    ein Diagramm mit einem beispielhaften Verlauf von Schwingungswerten eines Elektromotors,

Fig. 3    ein Diagramm mit einem beispielhaften Beschleunigungssignal,

Fig. 4    ein Diagramm mit einem Verlauf einer Amplitude einer Schwingung erster Ordnung mit zwei Resonanzstellen,

Fig. 5    ein Ablaufdiagramm für ein Ausführungsbeispiel des erfindungsgemäßen Verfahrens und

Fig. 6    eine schematische Darstellung eines Stators eines Ausführungsbeispiels eines erfindungsgemäßen Elektromotors.

Anhand der Figuren sollen Ausführungsbeispiele des erfindungsgemäßen Verfahrens genauer betrachtet werden, wobei sich die Ausführungsbeispiele jeweils auf einen Elektromotor beziehen, der Teil eines Ventilators ist und ein Laufrad des Ventilators antreibt.

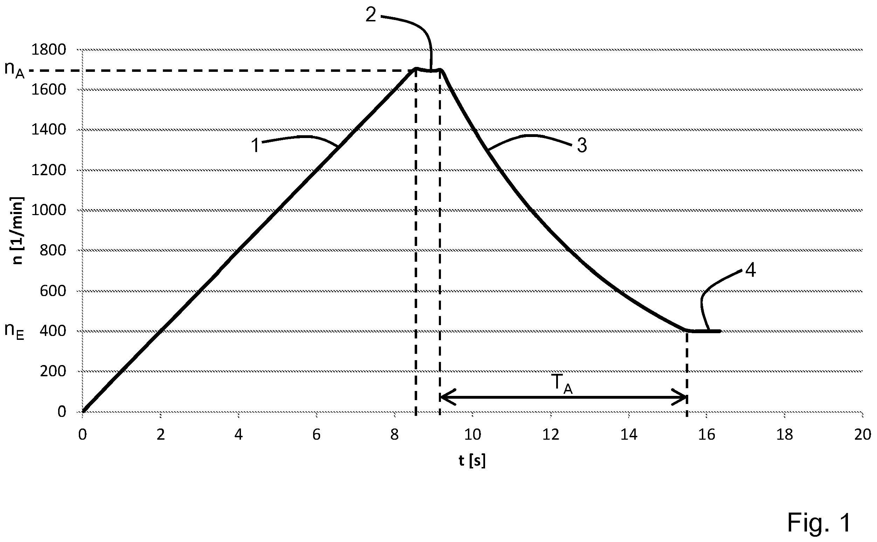

Fig. 1 zeigt ein Diagramm mit einem beispielhaften Verlauf einer Drehzahl des Elektromotors des Ventilators. In einer Beschleunigungsphase 1 wird der Ventilator zunächst aus dem Stillstand über ca. 8,5 Sekunden hinweg auf eine Drehzahl nahe einer Anfangsdrehzahl $n_A$ von ca. 1700 Umdrehungen pro Minute beschleunigt. In einer Stabilisierungsphase 2 werden leichte Überschwinger ausgeregelt, sodass der Ventilator nach ca. 9,2 Sekunden mit der Anfangsdrehzahl $n_A$ dreht. Danach wird ein Auslauf 3 ausgelöst, indem eine antreibende Beaufschlagung des Elektromotors des Ventilators deaktiviert wird. Nach insgesamt ca. 15,5 Sekunden hat der Ventilator eine Enddrehzahl $n_E$ erreicht, die in diesem Beispiel bei 400 Umdrehungen pro Minute liegt. Die Auslaufdauer $T_A$ beträgt damit ca. 6,3 Sekunden. Nach Erreichen der Enddrehzahl $n_E$ wird die Drehzahl in einer Haltephase 4 auf diesem Wert gehalten.

Während des Auslaufs nimmt die Drehzahl mit einem exponentiellen Zusammenhang kontinuierlich ab. Es gilt:

$$n(t) = n_A \cdot e^{-\lambda \cdot t}$$

Dabei ist $\lambda$ eine Zeitkonstante für die Abnahme und liegt beispielsweise bei 0,11.

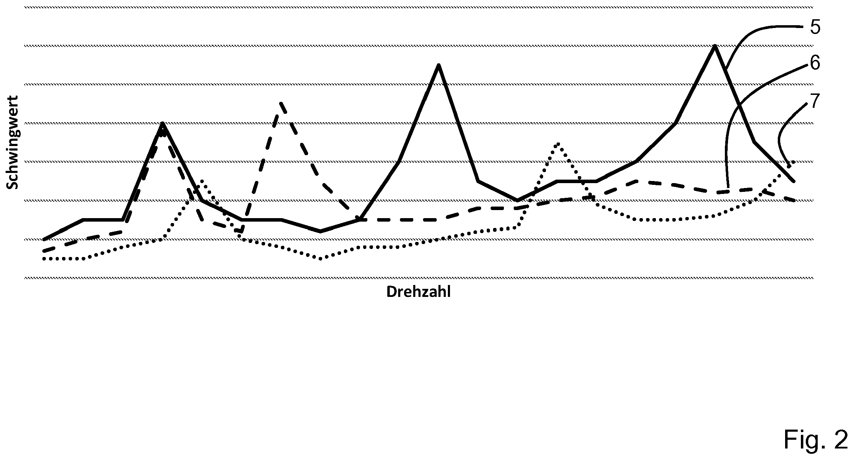

Während des Auslaufs werden wiederholt mit einer Abtastrate Schwingungswerte erfasst. Hierzu wird ein 3-Achsen-Schwingungssensor genutzt, wobei die drei Achsen paarweise senkrecht zueinander stehen. Beispielhafte Verläufe der Schwingungen, die durch den Schwingungssensor erfasst werden, sind in Fig. 2 dargestellt. Die durchgezogene Linie 5 stellt erfasste Schwingungen in einer ersten Sensorachse dar, die gestrichelte Linie 6 erfasste Schwingungen in einer zweiten Sensorachse und die punktierte Linie 7 erfasste Schwingungen in einer dritten Sensorachse. Ein Schwingungswert ist in diesem Beispiel durch ein Zahlentripel bestimmt, von dem jedes Element die Schwingungen in einer Richtung einer der drei Sensorachsen repräsentiert. Der Schwingungswert kann auch auf einen Betrag der Vektorsumme aller drei Komponenten oder einen Schwingungsanteil in einer vordefinierten Richtung reduziert werden.

Die Schwingungswerte werden zum Bestimmen eines Schwingungsverhaltens des Elektromotors analysiert. Da der Elektromotor Teil eines Ventilators ist und das Laufrad des Ventilators direkt mit dem Läufer des Elektromotors gekoppelt ist, wird auf diese Weise das Schwingungsverhalten des Ventilators bestimmt. Zum Bestimmen des Schwingungsverhaltens wird in diesem Ausführungsbeispiel eine Frequenzanalyse des Schwingungssignals durchgeführt, die hier mittels des Görtzel-Algorithmus durchgeführt wird. Da in dem vorliegenden Ausführungsbeispiel das Resonanzverhalten des Ventilators bestimmt werden soll und die erste Ordnung des Schwingungssignals besonders relevant für Resonanzen ist, werden Schwingungen erster Ordnung bestimmt.

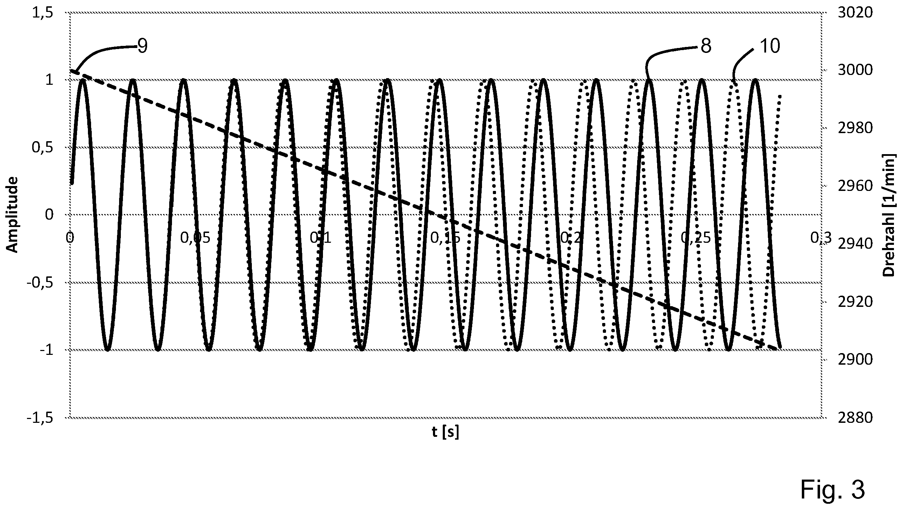

Anhand Fig. 3 soll die Genauigkeit des Görtzel-Algorithmus bei dem erfindungsgemäßen Verfahren und den Einfluss einer kontinuierlich sinkenden Drehzahl genauer betrachtet werden. Dabei wird in Fig. 3 davon ausgegangen, dass der Ventilator mit einer Anfangsdrehzahl $n_A$ von 3000 Umdrehungen pro Minute dreht. In Fig. 3 ist als durchgezogene Linie 8 eine Schwingung erster Ordnung eingezeichnet, deren Amplitude auf 1 normiert ist (Achsenbeschriftung links) und deren Periodenlänge infolge der abnehmenden Drehzahl kontinuierlich zunimmt. Aufgrund der Drehzahl von 3000 Umdrehungen pro Minute entspricht die Periodenlänge zu Beginn des Auslaufs einer Frequenz von 50 Hz. Die Abnahme der Drehzahl ist mit der gestrichelten Linie 9 und der rechten Achsenbeschriftung dargestellt. Mit einer punktierten Linie 10 ist eine Kurve eingezeichnet, die einem konstanten Drehen mit einer Anfangsdrehzahl entspricht. Diese Kurve ist ein Sinus mit einer Frequenz von 50 Hz.

Zu Beginn des Auslaufs ist die Drehzahländerung $\alpha_{max}$ am größten. Dabei gilt für $\alpha_{max}$ folgender Zusammenhang:

$$\alpha_{max} = \frac{d}{dt} n_A e^{(-\lambda \cdot t)} = -\lambda \cdot n_A \cdot e^{(-\lambda \cdot t)}$$

Zum Zeitpunkt t = 0 mit einer Anfangsdrehzahl $n_A$ = 3000 Umdrehungen pro Minute ergibt sich für $\alpha_{max} \approx$ -339. Daraus ergeben sich ca. 47 Perioden einer Schwingung 1. Ordnung in diesem Zeitraum oder einen Drehzahlverlust pro Periode von ca. 7,17 Umdrehungen pro Minute.

In einer Simulation mit einer angenommenen Abtastrate von 1,3 kHz und der Bedingung, dass $2^k$ erfasste Schwingungswerte zu einem Satz von Schwingungswerten zusammengefasst werden, ergeben sich folgende Ergebnisse:

| Amplitude Originalsignal | 1 |
|---|---|

(fortgesetzt)

| Amplitude 50 Hz | 0,998 |
| Amplitude mit Frequenzänderung | 0,996 |

Diese Zahlenwerte zeigen, dass die Drehzahländerung während eines Auslaufs nur geringen Einfluss auf die Genauigkeit des Görtzel-Algorithmus hat.

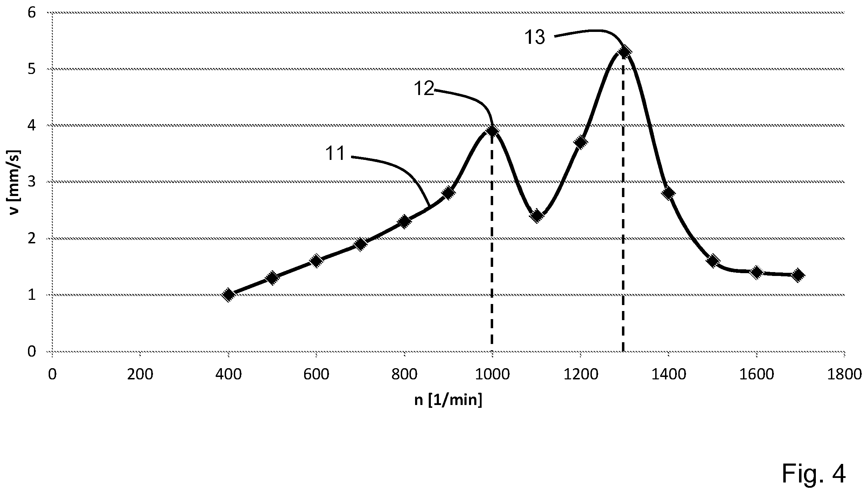

In Fig. 4 ist ein beispielhafter Verlauf von Schwingungswerten (hier die Schwingungsgeschwindigkeit) über der Drehzahl dargestellt. Diesem Diagramm liegt der Drehzahlverlauf für den Auslauf aus Fig. 1 zugrunde. Die Werte ergeben sich aus der folgenden Tabelle, bei der jede Zeile ein Amplituden-Drehzahl-Paar bildet und die aus dem wiederholten Erzeugen von erfassten Schwingungswerten und dem wiederholten Erzeugen von Ist-Drehzahlen hervorgegangen ist:

| Drehzahl | Schwingamplitude 1. Ordnung [mm/s] |
|----------|------------------------------------|
| 1694 | 1,35 |
| 1600 | 1,4 |
| 1500 | 1,6 |
| 1400 | 2,8 |
| 1300 | 5,3 |
| 1200 | 3,7 |
| 1100 | 2,4 |
| 1000 | 3,9 |
| 900 | 2,8 |
| 800 | 2,3 |
| 700 | 1,9 |
| 600 | 1,6 |
| 500 | 1,3 |
| 400 | 1 |

In Fig. 4 sind diese Werte mit einem Spline interpoliert und mit einer durchgezogenen Linie 11 dargestellt. Es ist zu erkennen, dass der Ventilator eine erste Resonanzstelle 12 bei ca. 1000 Umdrehungen pro Minute und eine zweite Resonanzstelle 13 bei ca. 1300 Umdrehungen pro Minute aufweist.

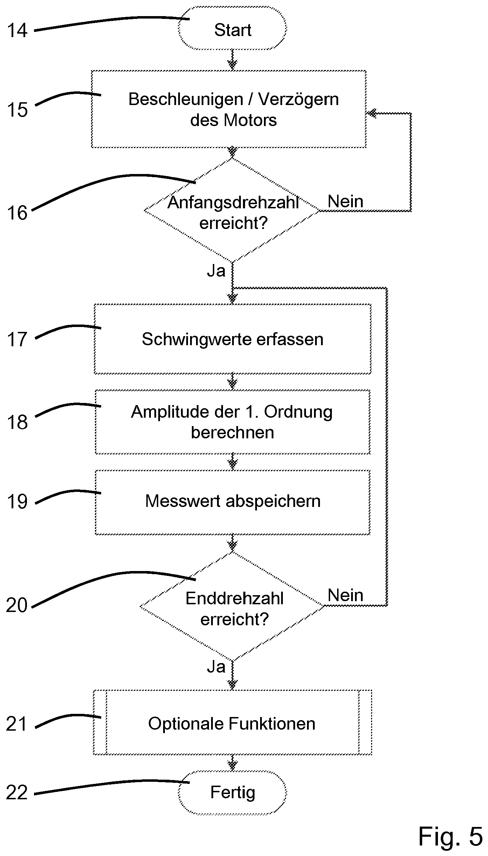

In Fig. 5 ist ein Ausführungsbeispiel eines erfindungsgemäßen Verfahrens mithilfe eines Ablaufdiagramms dargestellt. In Schritt 14 startet der Ablauf. In Schritt 15 wird der Elektromotor auf eine Anfangsdrehzahl $n_A$ gebracht, indem der Elektromotor beschleunigt oder verzögert wird. In Schritt 16 wird geprüft, ob die Anfangsdrehzahl $n_A$ erreicht ist. Wenn diese Frage mit "nein" beantwortet werden muss, wird in Schritt 15 zurückgekehrt und der Elektromotor weiter beschleunigt oder verzögert. Wenn die Frage mit "ja" beantwortet werden kann und damit die Anfangsdrehzahl $n_A$ erreicht ist, wird der Auslauf ausgelöst, in dem die antreibende Beaufschlagung des Elektromotors deaktiviert wird. In Schritt 17 werden Schwingungswerte mittels mindestens eines Schwingungssensors erfasst. Aus einem Satz aufeinanderfolgender Schwingungswerte wird in Schritt 18 eine Amplitude einer Schwingung 1. Ordnung berechnet, wobei hierzu der Görtzel-Algorithmus verwendet werden kann. Die derart gewonnenen Messwerte werden in Schritt 19 abgespeichert. In Schritt 20 wird geprüft, ob die Enddrehzahl $n_E$ erreicht ist. Ist dies nicht der Fall, wird zu Schritt 17 zurückgekehrt und es werden weitere Schwingungswerte erfasst und ausgewertet. Ist die Enddrehzahl $n_E$ erreicht, werden in Schritt 21 optionale Funktionen ausgeführt. Diese optionalen Funktionen können beispielsweise das Ausführen eines Algorithmus zum Berechnen von Resonanzstellen umfassen. Mit Schritt 22 endet das Verfahren.

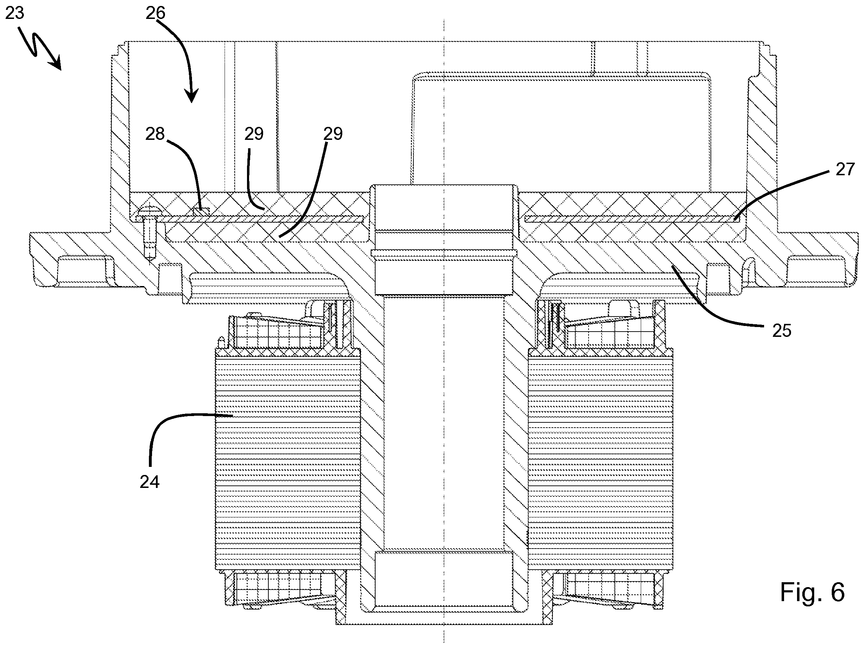

Fig. 6 zeigt ein Ausführungsbeispiel eines erfindungsgemäßen Elektromotors 23, der konstruktiv recht ähnlich wie der in der DE 10 2018 211 838 A1 offenbarte Elektromotor aufgebaut sein kann. Der Elektromotor 23 ist in Außenläuferbauweise aufgebaut und umfasst einen Stator 24 und einen Rotor, der der Übersichtlichkeit wegen hier nicht dargestellt ist. An einer Statorbuchse 25 ist ein Elektronikgehäuse 26 ausgebildet, in dem eine Leiterplatte 27 angeordnet ist. Auf der Leiterplatte ist eine Motorelektronik aufgebaut, die Ströme für eine antreibende Beaufschlagung des Elektromotors an die Wicklungen des Stators 24 ausgibt. Auf der Leiterplatte 27 ist ein Schwingungssensor 28 angeordnet, der Schwingungen des Elektromotors erfasst. Die Leiterplatte ist in eine Vergussmasse 29 eingebettet, die Schwingungen von der Statorbuchse 25 zu dem Schwingungssensor 28 koppelt. Das erfindungsgemäße Verfahren wird auf der Motorelektronik ausgeführt, die zum Ausführen des Verfahrens während eines Auslaufs ausgebildet ist.

Hinsichtlich weiterer vorteilhafter Ausgestaltungen des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

**Bezugszeichenliste**

| | |
|---|---|
| 1 | Beschleunigungsphase |
| 2 | Stabilisierungsphase |
| 3 | Auslauf |
| 4 | Haltephase |
| 5 | Schwingungen in einer ersten Sensorachse |
| 6 | Schwingungen in einer zweiten Sensorachse |
| 7 | Schwingungen in einer dritten Sensorachse |
| 8 | 1. Ordnung mit abnehmender Drehzahl |
| 9 | Abnehmende Drehzahl |
| 10 | Kurve mit konstanter Frequenz |
| 11 | Verlauf der Schwingungsamplituden |
| 12 | Erste Resonanzstelle |
| 13 | Zweite Resonanzstelle |
| 14 - 22 | Schritte des Ablaufdiagramms |
| 23 | Elektromotor (Rotor nicht dargestellt) |
| 24 | Stator |
| 25 | Statorbuchse |
| 26 | Elektronikgehäuse |
| 27 | Leiterplatte |
| 28 | Schwingungssensor |
| 29 | Vergussmasse |
| | |
| $n_A$ | Anfangsdrehzahl |
| $n_E$ | Enddrehzahl |
| $T_A$ | Auslaufdauer |

**Patentansprüche**

1. Verfahren zum Bestimmen eines Schwingungsverhaltens eines Elektromotors, insbesondere eines Elektromotors eines Ventilators, wobei der Elektromotor (23) bei Deaktivieren einer antreibenden Beaufschlagung während eines Auslaufs (3) über eine Auslaufdauer ($T_A$) hinweg von einer Anfangsdrehzahl ($n_A$) zu einer Enddrehzahl ($n_E$) ausläuft, umfassend die Schritte:

   Bringen des Elektromotors (23) auf die Anfangsdrehzahl ($n_A$),
   Auslösen des Auslaufs (3) durch Deaktivieren einer den Elektromotor (23) antreibenden Beaufschlagung,
   wiederholtes Erzeugen eines erfassten Schwingungswerts während des Auslaufs durch Erfassen von Schwingungen zumindest eines Teils des Elektromotors (23) mittels mindestens eines Schwingungssensors (28),
   wiederholtes Erzeugen eines Ist-Drehzahlwerts des Elektromotors (23) während des Auslaufs (3) und
   Bestimmen eines Schwingungsverhaltens des Elektromotors (23) durch Auswerten erfasster Schwingungswerte unter Berücksichtigung der Ist-Drehzahlwerte.

2. Verfahren nach Anspruch 1, **dadurch gekennzeichnet, dass** bei dem Schritt des Bestimmens des Schwingungsverhaltens eine Frequenzanalyse von erfassten Schwingungswerten und/oder eine Bestimmung mindestens eines Effektivwerts von erfassten Schwingungswertendurchgeführt wird.

3. Verfahren nach Anspruch 1 oder 2, **dadurch gekennzeichnet, dass** bei dem Schritt des Bestimmens des Schwingungsverhaltens eine vordefinierte Anzahl von nacheinander erfassten Schwingungswerten als ein Satz von Schwingungswerten ausgewertet werden, wobei einem Satz von Schwingungswerten eine Drehzahl zugeordnet wird, die von zumindest einer Ist-Drehzahl für den Satz von Schwingungswerten abgeleitet ist.

4. Verfahren nach einem der Ansprüche 1 bis 3, **dadurch gekennzeichnet, dass** bei dem Schritt des Bestimmens eines Schwingungsverhaltens eine Vielzahl von Amplituden-Drehzahl-Paaren ermittelt wird, die jeweils eine Amplitude einer Schwingung mit einer zugehörigen Drehzahl in Beziehung setzen.

5. Verfahren nach einem der Ansprüche 1 bis 4, **dadurch gekennzeichnet, dass** bei dem Schritt des Bestimmens eines Schwingungsverhaltens eine oder mehrere Resonanzstellen (12, 13) des Elektromotors (23) ermittelt werden, wobei vorzugsweise eine Bewertung durchgeführt wird, ob eine Resonanzstelle (12, 13) kritische Schwingungsamplituden umfasst.

6. Verfahren nach Anspruch 5, **dadurch gekennzeichnet, dass** bei Erkennen einer Resonanzstelle (12, 13) eine verfeinernde Messung durchgeführt wird, wobei der Elektromotor (23) auf eine neue Anfangsdrehzahl gebracht wird, die größer als eine Drehzahl der Resonanzstelle (12, 13) ist, und wobei in einem neuen Auslauf, der von der neuen Anfangsdrehzahl startet, Schwingungswerte erfasst werden.

7. Verfahren nach einem der Ansprüche 1 bis 6, **dadurch gekennzeichnet, dass** bei dem Schritt des Bringens des Elektromotors (23) auf die Anfangsdrehzahl ($n_A$) der Elektromotor (23) beschleunigt oder abgebremst wird, und/oder dass ein erfasster Schwingungswert Schwingungen in einer, zwei oder drei Raumrichtungen repräsentiert.

8. Verfahren nach einem der Ansprüche 1 bis 7, **dadurch gekennzeichnet, dass** die Anfangsdrehzahl eine Drehzahl ist, mit der der Elektromotor maximal betrieben wird und/oder die für ein Bestimmen des Schwingungsverhaltens maximal von Interesse ist.

9. Verfahren nach einem der Ansprüche 1 bis 8, **dadurch gekennzeichnet, dass** die Enddrehzahl ($n_E$) kleiner als 500 Umdrehungen pro Minute, bevorzugter Weise kleiner als 250 Umdrehungen pro Minute, ganz besonders bevorzugter Weise kleiner als 100 Umdrehungen pro Minute ist, wobei der Elektromotor (23) vorzugsweise bei Erreichen und/oder Unterschreiten der Enddrehzahl ($n_E$) aktiv abgebremst wird.

10. Verfahren nach eine der Ansprüche 1 bis 9, **dadurch gekennzeichnet, dass** die Auslaufdauer ($T_A$) größer als 5 Sekunden, vorzugsweise größer als 15 Sekunden ist und/oder dass die Auslaufdauert ($T_A$) kleiner als 5 Minuten, vorzugsweise kleiner als 1 Minute, besonders bevorzugter Weise kleiner als 30 Sekunden ist.

11. Verfahren nach einem der Ansprüche 1 bis 10, **dadurch gekennzeichnet, dass** das Schwingungsverhalten bei jedem Auslauf (3) des Elektromotors (23) oder bei einem Auslauf (3) nach Ablauf einer vorgegebenen Anzahl von Betriebsstunden des Elektromotors (23) bestimmt wird, wobei vorzugsweise ein bestimmtes Schwingungsverhalten mit einem zuvor bestimmten Schwingungsverhalten verglichen wird.

12. Elektromotor, der zum Ausführen eines Verfahren nach einem der Ansprüche 1 bis 11 ausgebildet ist, umfassend einen Mikroprozessor und einen Speicher mit Software, wobei der Mikroprozessor durch Ausführen der Software zum Ausführen des Verfahrens steuerbar ist.

13. Elektromotor nach Anspruch 12, **gekennzeichnet durch** einen Schwingungssensor (28) zum Erfassen von Schwingungen des Elektromotors (23) oder eines Teils des Elektromotors (23), wobei der Schwingungssensor (28) in einer Elektronik des Elektromotors (23) integriert ist.

14. Elektromotor nach Anspruch 12 oder 13, **gekennzeichnet durch** eine Motorelektronik, die den Elektromotor (23) während dessen Betrieb ansteuert, wobei die Motorelektronik ein ermitteltes Schwingungsverhalten zum Ansteuern des Elektromotors (23) nutzt und dabei vorzugsweise Drehzahlen des Elektromotors (23) mit ungünstigem Schwingungsverhalten vermeidet.

15. Ventilator, der einen Elektromotor nach einem der Ansprüche 12 bis 14 umfasst, wobei ein Rotor des Elektromotors mit einem Laufrad des Ventilators gekoppelt ist.

**Claims**

1. Method for determining a vibration behaviour of an electric motor, in particular an electric motor of a fan, wherein the electric motor (23), when a driving action is deactivated during a run-down operation (3) over a run-down duration ($T_A$), runs down from an initial rotational speed ($n_A$) to a final rotational speed ($n_E$), comprising the steps of:

   bringing the electric motor (23) to the initial rotational speed ($n_A$),
   initiating the run-down (3) by deactivating an action which drives the electric motor (23),
   repeatedly producing a detected vibration value during the run-down operation by detecting vibrations of at least one component of the electric motor (23) by means of at least one vibration sensor (28),
   repeatedly producing an actual rotational speed value of the electric motor (23) during the run-down operation (3) and
   determining a vibration behaviour of the electric motor (23) by evaluating detected vibration values taking into account the actual rotational speed values.

2. Method according to claim 1, **characterised in that** during the step of determining the vibration behaviour a frequency analysis of detected vibration values and/or a determination of at least one effective value of detected vibration values is/are carried out.

3. Method according to claim 1 or claim 2, **characterised in that** during the step of determining the vibration behaviour a predefined number of successively detected vibration values are evaluated as a set of vibration values, wherein there is associated with a set of vibration values a rotational speed which is derived from at least one actual rotational speed for the set of vibration values.

4. Method according to any one of claims 1 to 3, **characterised in that** during the step of determining a vibration behaviour a large number of amplitude/rotational speed pairs which each relate an amplitude of a vibration to an associated rotational speed are established.

5. Method according to any one of claims 1 to 4, **characterised in that** during the step of determining a vibration behaviour one or more resonance locations (12, 13) of the electric motor (23) are established, wherein an evaluation is preferably carried out as to whether a resonance location (12, 13) comprises critical vibration amplitudes.

6. Method according to claim 5, **characterised in that**, when a resonance location (12, 13) is identified, a refining measurement is carried out, wherein the electric motor (23) is brought to a new initial rotational speed which is greater than a rotational speed of the resonance location (12, 13), and wherein, in a new run-down operation which begins from the new initial rotational speed, vibration values are detected.

7. Method according to any one of claims 1 to 6, **characterised in that** during the step of bringing the electric motor (23) to the initial rotational speed ($n_A$) the electric motor (23) is accelerated or decelerated,
   and/or **in that** a detected vibration value represents vibrations in one, two or three spatial directions.

8. Method according to any one of claims 1 to 7, **characterised in that** the initial rotational speed is a rotational speed at which the electric motor is operated at a maximum level and/or which is of maximum interest for determining the vibration behaviour.

9. Method according to any one of claims 1 to 8, **characterised in that** the final rotational speed ($n_E$) is less than 500 revolutions per minute, preferably less than 250 revolutions per minute, in a very particularly preferred manner less than 100 revolutions per minute, wherein the electric motor (23) is preferably actively decelerated when reaching and/or falling below the final rotational speed ($n_E$).

10. Method according to any one of claims 1 to 9, **characterised in that** the run-down duration ($T_A$) is greater than 5 seconds, preferably greater than 15 seconds and/or **in that** the run-down duration ($T_A$) is less than 5 minutes, preferably less than 1 minute, in a particularly preferred manner less than 30 seconds.

11. Method according to any one of claims 1 to 10, **characterised in that** the vibration behaviour during each run-down operation (3) of the electric motor (23) or during a run-down operation (3) is determined after a predetermined number of operating hours of the electric motor (23) have elapsed, wherein a specific vibration behaviour is preferably compared with a previously determined vibration behaviour.

12. Electric motor which is constructed to carry out a method according to any one of claims 1 to 11, comprising a microprocessor and a memory with software, wherein the microprocessor can be controlled by implementing the software for carrying out the method.

13. Electric motor according to claim 12, **characterised by** a vibration sensor (28) for detecting vibrations of the electric motor (23) or a component of the electric motor (23), wherein the vibration sensor (28) is integrated in an electronic system of the electric motor (23).

14. Electric motor according to claim 12 or 13, **characterised by** an electronic motor system which controls the electric motor (23) during its operation, wherein the electronic motor system uses an established vibration behaviour for controlling the electric motor (23) and in this instance preferably avoids rotational speeds of the electric motor (23) with unfavourable vibration behaviour.

15. Fan which comprises an electric motor according to any one of claims 12 to 14, wherein a rotor of the electric motor is coupled to an impeller of the fan.


**Revendications**

1. Procédé pour déterminer le comportement vibratoire d'un moteur électrique, en particulier d'un moteur électrique d'un ventilateur, dans lequel le moteur électrique (23), lors de la désactivation d'une sollicitation d'entraînement pendant une décélération (3), ralentit, pendant une durée de ralentissement ($T_A$), d'une vitesse de rotation initiale ($n_A$) à une vitesse de rotation finale ($n_E$), comprenant les étapes suivantes :

    amener le moteur électrique (23) à la vitesse de rotation initiale ($n_A$),
    déclencher la décélération (3) par désactivation d'une sollicitation d'entraînement du moteur électrique (23),
    générer plusieurs fois une valeur de vibration détectée pendant la décélération par détection des vibrations d'au moins une partie du moteur électrique (23) à l'aide d'au moins un capteur de vibrations (28),
    générer plusieurs fois une valeur de vitesse de rotation réelle du moteur électrique (23) pendant la décélération (3) et
    déterminer un comportement vibratoire du moteur électrique (23) par évaluation des valeurs de vibration détectées en tenant compte des valeurs de vitesse de rotation réelles.

2. Procédé selon la revendication 1 **caractérisé en ce que**, lors de l'étape de détermination du comportement vibratoire, une analyse de fréquence des valeurs de vibration enregistrées et/ou une détermination d'au moins une valeur effective des valeurs de vibration enregistrées est effectuée.

3. Procédé selon la revendication 1 ou 2, **caractérisé en ce que**, lors de l'étape de détermination du comportement vibratoire, un nombre prédéfini de valeurs vibratoires enregistrées successivement est évalué comme un ensemble de valeurs vibratoires, une vitesse de rotation dérivée d'au moins une vitesse de rotation réelle pour l'ensemble de valeurs vibratoires étant attribuée à un ensemble de valeurs vibratoires.

4. Procédé selon l'une des revendications 1 à 3, **caractérisé en ce que**, lors de l'étape de détermination d'un comportement vibratoire, une pluralité de paires amplitude-vitesse de rotation est déterminée, chacune mettant en relation une amplitude d'une vibration avec une vitesse de rotation associée.

5. Procédé selon l'une des revendications 1 à 4, **caractérisé en ce que**, lors de l'étape de détermination d'un comportement vibratoire, un ou plusieurs points de résonance (12, 13) du moteur électrique (23) sont déterminés, une évaluation étant de préférence effectuée pour déterminer si un point de résonance (12, 13) comprend des amplitudes vibratoires critiques.

6. Procédé selon la revendication 5, **caractérisé en ce que**, lors de la détection d'un point de résonance (12, 13), une mesure plus précise est effectuée, le moteur électrique (23) étant amené à une nouvelle vitesse de rotation initiale qui est supérieure à une vitesse de rotation du point de résonance (12, 13) et des valeurs de vibration étant détectées dans une nouvelle phase de décélération qui commence à partir de la nouvelle vitesse de rotation initiale.

7. Procédé selon l'une des revendications 1 à 6, **caractérisé en ce que**, lors de l'étape consistant à amener le moteur électrique (23) à la vitesse de rotation initiale ($n_A$), le moteur électrique (23) est accéléré ou freiné,

et/ou **en ce qu'**une valeur de vibration détectée représente des vibrations dans une, deux ou trois directions spatiales.

8. Procédé selon l'une des revendications 1 à 7, **caractérisé en ce que** la vitesse de rotation initiale est une vitesse de rotation à laquelle le moteur électrique fonctionne au maximum et/ou qui présente un intérêt maximal pour déterminer le comportement vibratoire.

9. Procédé selon l'une des revendications 1 à 8, **caractérisé en ce que** la vitesse de rotation finale ($n_E$) est inférieure à 500 tours par minute, de préférence inférieure à 250 tours par minute, de manière particulièrement préférée inférieure à 100 tours par minute, le moteur électrique (23) étant de préférence freiné activement lorsque la vitesse de rotation finale ($n_E$) est atteinte et/ou dépassée.

10. Procédé selon l'une des revendications 1 à 9, **caractérisé en ce que** la durée de décélération ($T_A$) est supérieure à 5 secondes, de préférence supérieure à 15 secondes, et/ou **en ce que** la durée de décélération ($T_A$) est inférieure à 5 minutes, de préférence inférieure à 1 minute, de manière particulièrement préférée inférieure à 30 secondes.

11. Procédé selon l'une des revendications 1 à 10, **caractérisé en ce que** le comportement vibratoire est déterminé à chaque décélération (3) du moteur électrique (23) ou lors d'une décélération (3) après un nombre prédéfini d'heures de fonctionnement du moteur électrique (23), un comportement vibratoire déterminé étant de préférence comparé à un comportement vibratoire prédéfini.

12. Moteur électrique conçu pour exécuter un procédé selon l'une des revendications 1 **à 11,** comprenant un microprocesseur et une mémoire avec un logiciel, le microprocesseur pouvant être commandé par l'exécution du logiciel pour exécuter le procédé.

13. Moteur électrique selon la revendication 12, **caractérisé par** un capteur de vibrations (28) pour détecter les vibrations du moteur électrique (23) ou d'une partie du moteur électrique (23), le capteur de vibrations (28) étant intégré dans un système électronique du moteur électrique (23).

14. Moteur électrique selon la revendication 12 ou 13, **caractérisé par** un système électronique de moteur qui commande le moteur électrique (23) pendant son fonctionnement, le système électronique de moteur utilisant un comportement vibratoire déterminé pour commander le moteur électrique (23) et évitant de préférence les vitesses de rotation du moteur électrique (23) présentant un comportement vibratoire défavorable.

15. Ventilateur comprenant un moteur électrique selon l'une des revendications 12 à 14, un rotor du moteur électrique étant couplé à une roue du ventilateur.

Fig. 1

EP 4 158 292 B1

Fig. 2

Fig. 3

Fig. 4

EP 4 158 292 B1

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018211838 A1
- DE 202019101262 U1